# EUROPEAN PATENT APPLICATION

(11) **EP 3 934 257 A1**
(43) Date of publication of application: **05.01.2022**
(21) Application number: 20918517.2
(22) Date of filing: 19.11.2020
(51) Int. Cl.: H04N 21/2187, H04N 21/258, H04N 21/41, H04N 21/488, H04N 21/6405, A63F 13/795, A63F 13/35, A63F 13/86

(54) **LIVESTREAMING METHOD, APPARATUS AND DEVICE, AND COMPUTER-READABLE STORAGE MEDIUM**

(30) Priority: 13.02.2020 CN 202010090446
(71) Applicant: Beijing Dajia Internet Information Technology Co., Ltd., Beijing 100085 (CN)
(72) Inventor: DU, Haitao, Beijing 100085 (CN)
(74) Representative: Mathys & Squire
(86) International application number: PCT/CN2020/130167
(87) International publication number: WO 2021/159799

(57) **Abstract**

The present application relates to the technical field of computers, and provided therein are a livestreaming method, apparatus and device, and a computer-readable storage medium, which are used to provide a method for acquiring information of different parties who livestream together. The method comprises: receiving team formation instruction information, which comprises account information of at least one party in the same team in a target application; acquiring livestream identification information of a party that corresponds to the account information of the at least one party and that participates in teamed livestreaming; and sending the acquired livestream identification information to a client used for teamed livestreaming and a client that plays back the teamed livestreaming media stream so that the clients display part or all of the livestream identification information. In the described method, livestream identification information of parties who are livestreaming simultaneously is acquired, and each client is enabled to display the acquired livestream identification information so that a party watching a livestream can promptly and conveniently learn information of each of the parties who are livestreaming in the same event.

## Description

### Cross-reference to Related Applications

The present application claims priority to the Chinese Patent Application No. 202010090446.3, filed to the China National Intellectual Property Administration on February 13, 2020 and entitled "LIVE STREAMING METHOD AND APPARATUS, DEVICE AND COMPUTER READABLE STORAGE MEDIUM", the entire contents of which are incorporated herein by reference.

### Field

Embodiments of the present application relate to the field of computer technology, in particular to a live streaming method and apparatus, a device and a computer readable storage medium.

### Background

In the related art, different objects may form a team in a target application, e.g., a game application, to participate in activities in the target application and the livestream their activities in the target application through a live streaming platform. However, the different objects in the team activity may only livestream an activity process or contents respectively, and audiences may only watch the activity process or the contents livestreamed by one object and have no idea of related information of other objects that are in the middle of live streaming at the same time as a live streaming object that the audiences are watching right now.

### Summary

Embodiments of the present application provide a live streaming method and apparatus, a device and a computer readable storage medium, used for at least providing a method for acquiring related information of different objects perform the live stream together.

A first aspect of an embodiment of the present application provides a live streaming method, applied to a live streaming server and including:
receiving team forming indication information, wherein the team forming indication information includes account information of at least one object in one same team in a target application;
acquiring live streaming identification information of an object corresponding to the account information of the at least one object and participating in a team live stream; and
sending the acquired live streaming identification information to a client used for the team live stream and a client playing a media stream of the team live stream to make the client used for the team live stream and the client playing the media stream display part of or all of the live streaming identification information.

A second aspect of an embodiment of the present application provides a live streaming method, applied to a client and including:
receiving live streaming identification information of an object participating in a team live stream sent by a live streaming server, wherein the live streaming identification information is acquired by the live streaming server based on received team forming indication information, and the team forming indication information includes account information of at least one object in one same team in a target application; and
displaying part of or all of the live streaming identification information.

A third aspect of an embodiment of the present application provides a live streaming method, applied to a target application server and including:
establishing team forming indication information, wherein the team forming indication information includes account information of at least two objects in one same team in a target application; and
sending the team forming indication information to a live streaming server, so that a live streaming client acquires live streaming identification information of an object corresponding to account information of at least one object and participating in a team live stream and sends the live streaming identification information to a client used for the team live stream and a client playing a media stream of the team live stream.

A fourth aspect of an embodiment of the present application provides a live streaming apparatus, including a team forming indication information receiving unit, a live streaming identification information acquiring unit and a live streaming identification information sending unit, wherein:
the team forming indication information receiving unit is configured to receive team forming indication information, and the team forming indication information includes account information of at least one object in one same team in a target application;
the live streaming identification information acquiring unit is configured to acquire live streaming identification information of an object corresponding to the account information of the at least one object and participating in a team live stream; and
the live streaming identification information sending unit is configured to send the acquired live streaming identification information to a client used for the team live stream and a client playing a media stream of the team live stream to make the client used for the team live stream and the client playing the media stream display part of or all of the live streaming identification information.

A fifth aspect of an embodiment of the present application provides a live streaming apparatus, including an information receiving unit and an information displaying unit, wherein:
the information receiving unit is configured to receive live streaming identification information of an object participating in a team live stream sent by a live streaming server, wherein the live streaming identification information is acquired by the live streaming server based on received team forming indication information, and the team live streaming information includes account information of at least one object in one same team in a target application; and
the information displaying unit is configured to display part of or all of the live streaming identification information.

A sixth aspect of an embodiment of the present application provides a live streaming apparatus, including a team forming indication information establishing unit and a team forming indication information sending unit, wherein:
the team forming indication information establishing unit is configured to establish team forming indication information, wherein the team forming indication information includes account information of at least two objects in one same team in a target application; and
the team forming indication information sending unit is configured to send the team forming indication information to a live streaming server, so that a live streaming client acquires live streaming identification information of an object corresponding to account information of at least one object and participating in a team live stream and sends the live streaming identification information to a client used for the team live stream and a client playing a media stream of the team live stream.

A seventh aspect of an embodiment of the present application provides a computer device, including a memory, a processor and a computer program stored in the memory and running on the processor, wherein when the processor executes the program, any method in the first aspect of the embodiment of the present application and in one possible implementation is implemented.

An eighth aspect of an embodiment of the present application provides a computer device, including a memory, a processor and a computer program stored in the memory and running on the processor, wherein when the processor executes the program, any method in the second aspect of the embodiment of the present application and in one possible implementation is implemented.

A ninth aspect of an embodiment of the present application provides a computer device, including a memory, a processor and a computer program stored in the memory and running on the processor, wherein when the processor executes the program, any method in the third aspect of the embodiment of the present application and in one possible implementation is implemented.

A tenth aspect of an embodiment of the present application provides a computer readable storage medium, carrying one or more computer instruction programs. When the computer instruction programs are executed by one or more processors, the one or more processors execute any method in the first aspect or the second aspect or the third aspect of the embodiment of the present application.

### Brief Description of the Drawings

Accompanying drawings here, which are incorporated in and constitute a part of this specification, illustrate embodiments consistent with the present application and, together with the description, serve to explain principles of the embodiments of the present application and do not constitute an inappropriate limitation on the embodiments of the present application.
FIG. 1 is a schematic diagram of an application scene of a live stream provided by an embodiment of the present application.
FIG. 2 is a schematic diagram of an application scene of a live stream provided by an embodiment of the present application.
FIG. 3 is a schematic flowchart of a team live stream provided by an embodiment of the present application.
FIG. 4 is a schematic diagram of interaction in a process of a team live stream provided by an embodiment of the present application.
FIG. 5 is a schematic diagram of displaying live streaming identification information provided by an embodiment of the present application.
FIG. 6 is a schematic diagram of displaying live streaming identification information provided by an embodiment of the present application.
FIG. 7 is a schematic diagram of displaying live streaming identification information provided by an embodiment of the present application.
FIG. 8 is a schematic diagram of interaction in a process of a team live stream provided by an embodiment of the present application.
FIG. 9 is a schematic diagram of interaction in a process of switching a media stream of a live stream provided by an embodiment of the present application.
FIG. 10 is a schematic diagram of interaction in a process of exiting a team live stream provided by an embodiment of the present application.
FIG. 11 is a schematic diagram of interaction in a process of a team live stream provided an embodiment of the present application.
FIG. 12 is a schematic diagram of interaction in a process of a team live stream provided by an embodiment of the present application.
FIG. 13 is a schematic structural diagram of a live streaming apparatus provided by an embodiment of the present application.
FIG. 14 is a schematic structural diagram of a live streaming apparatus provided by an embodiment of the present application.
FIG. 15 is a schematic structural diagram of a live streaming apparatus provided by an embodiment of the present application.
FIG. 16 is a schematic structural diagram of a computer device provided by an embodiment of the present application.
FIG. 17 is a schematic structural diagram of a computer device provided by an embodiment of the present application.
FIG. 18 is a schematic structural diagram of a computer device provided by an embodiment of the present application.

### Detailed Description of the Embodiments

In order to enable those of ordinary skill in the art to better understand technical solutions of embodiments of the present application, the technical solutions in the embodiments of the present application will be clearly and fully described in combination with accompanying drawings.

It should be noted that terms like "first", "second", etc. in the description, claims and the drawings of the present application are used for distinguishing similar objects, but not for describing a specific sequence or a precedence order. In order to make those skilled in the art better understand the technical solutions of the embodiments of the present application conveniently, technical nouns concerning the embodiments of the present application will be described below.

Object: the object in the embodiments of the present application may be, but not limited to a user, a smart device like smart robot, etc. The object may include but is not limited to an object participating in a team live stream, an object watching a media stream of a live stream, an object in the same team in a target application, etc. In some cases of the embodiments of the present application, the object watching the media stream of the live stream is called audience, the object performing the live stream is called anchor, etc.

Client: various clients of the embodiments of the present application refer to various terminals (e.g., a mobile phone, a computer or a smart device) or clients on the various terminals and may include but are not limited to a live streaming client for live streaming, etc.

Target application: the target application of the embodiments of the present application refers to other applications apart from an application for live streaming of an object, and may include but is not limited to a game application, a music application, etc.

Embodiments of the present application design a live streaming method and apparatus, a device and a computer readable storage medium, used for at least providing a method for acquiring information of different objects performing one same live streaming. In the method of the embodiment of the present application, a plurality of objects in one same team in a target application may form a team for live streaming, namely, the plurality of objects may perform live streaming at the same time at same or different perspectives. The method specifically includes: a live streaming server receives team forming indication information, wherein the team forming indication information includes account information of at least one object in the same team in the target application; then live streaming identification information of an object corresponding to the account information of at least one object and participating in a team live stream is acquired; the acquired live streaming identification information is sent to a client used for the team live stream and a client playing a media stream of the team live stream; and each of the clients displays part of or all of the received live streaming identification information after receiving the live streaming identification information sent by the live streaming server.

In some embodiments, each of the clients may switch a current media stream of the team live stream displayed on the client to a media stream of the team live stream corresponding to the any live streaming identification information by a preset operation on any live streaming identification information to trigger live streaming switching information after receiving the live streaming identification information sent by the live streaming server. In the embodiment of the present application, the media stream of the team live stream may be but is not limited to at least one media stream among a live video stream or a live audio stream, etc.

The solution of the embodiment of the present application will be described in detail below in combination with the drawings.

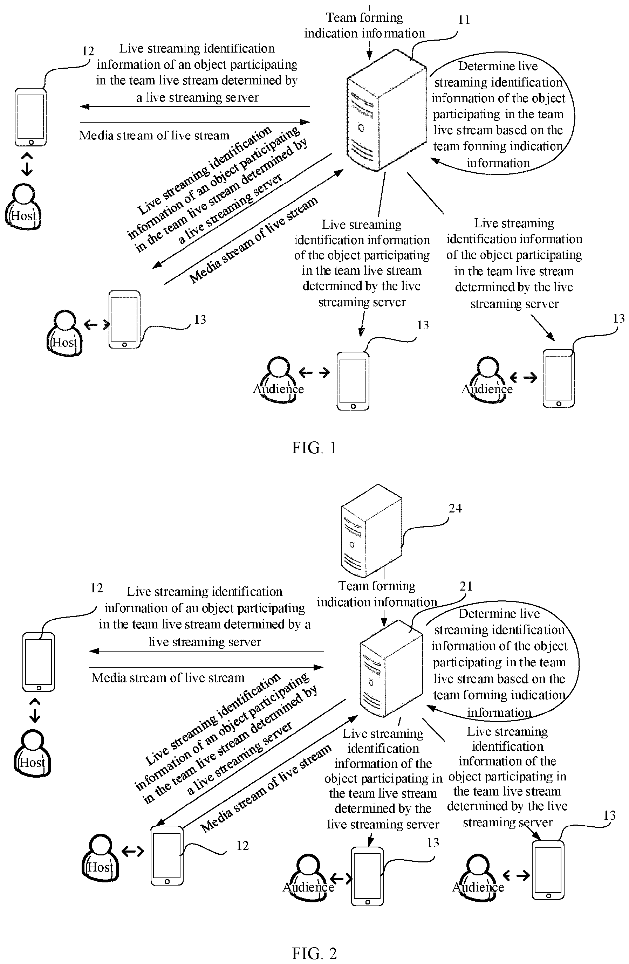

As shown in FIG. 1, an embodiment of the present application provides an application scene of live streaming, including a live streaming server 11 and a plurality of clients, wherein: the clients may include but are not limited to a client 12 used for the team live stream and a client 13 playing a media stream of the team live stream. For the sake of convenient description, in the embodiment of the present application, an object performing the live stream is called anchor, an object watching the live stream is called audience, the client used for the team live stream is called a anchor client, and the client playing the media stream of the team live stream is called an audience client. The embodiment of the present application is a scene for team live streaming of a plurality of persons, and thus at least two anchor clients should be included.

The live streaming server 11 may receive team forming indication information, determine live streaming identification information of an object participating in a team live stream based on the team forming indication information and send the determined team live streaming identification information to the anchor clients 12 and the audience client 13, wherein the team forming indication information includes account information of at least one object in the same team in a target application.

The anchor clients 12 and the audience clients 13 may display part of or all of the live streaming identification information.

The live streaming server 11 may draw a media stream of the live stream of the anchor clients 12 participating in a team live stream and push a media stream of the live stream indicated by the audience and corresponding to the live streaming identification information to the audience client 13 as the media stream of the team live stream.

The team forming indication information may be sent by any anchor client, or by a target application server of the target application. Therefore, an embodiment of the present application further provides an application scene of the live stream, as shown in FIG. 2, including a live streaming server 11, at least two anchor clients 12, an audience client 13 and a target application server 24, wherein the target application server 24 determines and sends team forming indication information to the live streaming server 21, wherein the team forming indication information includes account information of at least one object in the same team in a target application.

Functions of the live streaming server 11, the anchor clients 12 and the audience client 13 may refer to the contents mentioned above.

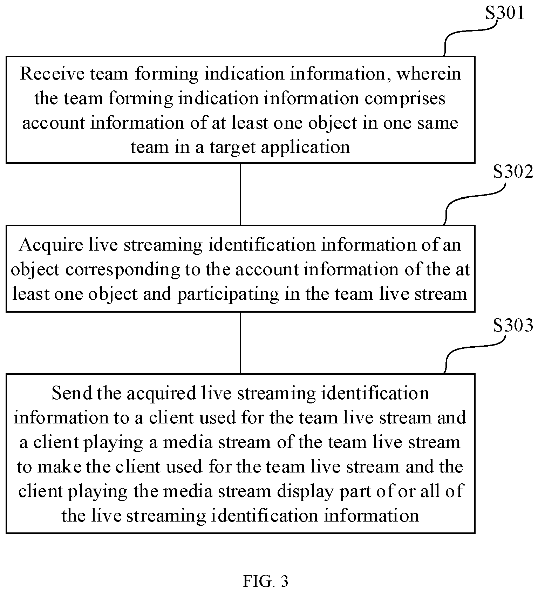

An embodiment of the present application provides a live streaming method, applicable to a live streaming system in FIG. 1 or FIG. 2, as shown in FIG. 3, applied to a live streaming server, and specifically including the following steps.

S301, team forming indication information is received, wherein the team forming indication information includes account information of at least one object in the same team in a target application.

S302, live streaming identification information of an object corresponding to the account information of at least one object and participating in the team live stream is acquired.

S303, the acquired live streaming identification information is sent to a client used for the team live stream and a client playing a media stream of the team live stream to make the client used for the team live stream and the client playing the media stream display part of or all of the live streaming identification information.

In some embodiments, the account information may be live streaming account information or non-live-streaming account information. In S302, the object corresponding to the account information of at least one object and participating in the team live stream may be acquired through the following manners.

In response to that the account information is the non-live-streaming account information, live streaming account information corresponding to at least one piece of non-live-streaming account information is acquired, and an object corresponding to the live streaming account information is used as the object participating in the team live stream; or in response to that the account information is the live streaming account information, an object corresponding to the at least one piece of live streaming account information is used as the object participating in the team live stream.

In some embodiments, when the account information is the non-live-streaming account information, the live streaming server may pre-store a corresponding relation between the live streaming account information and the non-live-streaming account information, or inquire the corresponding relation between the live streaming account information and the non-live-streaming account information stored in other places.

The team forming indication information may be sent by any anchor client, or by a target application server.

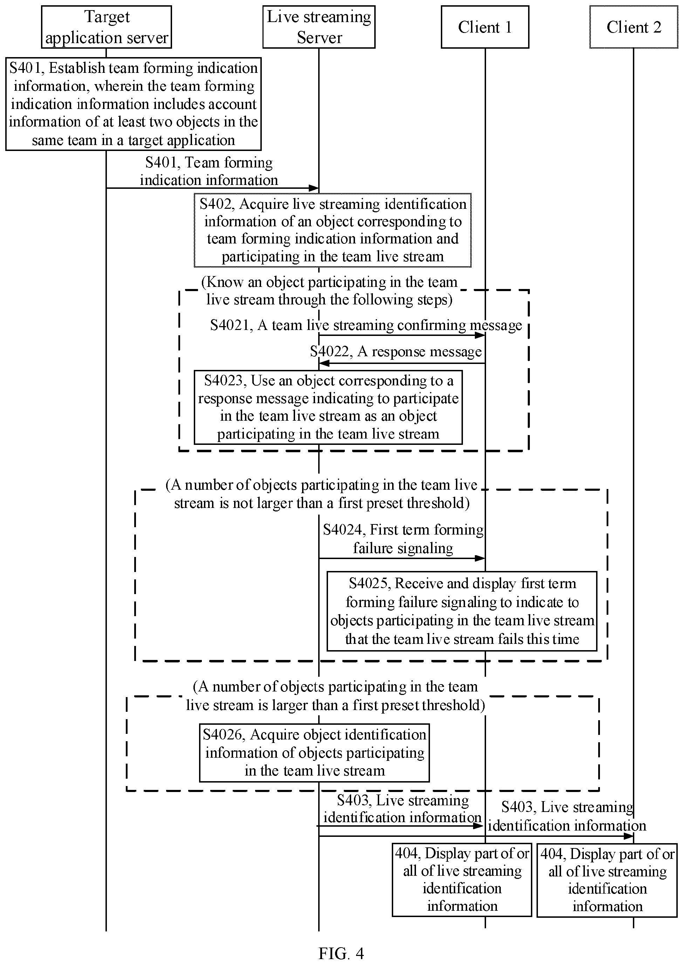

In some embodiments, in response to that the team forming indication information is sent by the target application server, namely, the target application server sends the team forming indication information to the live streaming server, and the live streaming server invites part of or all of objects corresponding to the account information in the team forming indication information in a default manner to participate in the team live stream. As shown in FIG. 4, FIG. 4 makes illustration by using a client 1 as a client corresponding to the account information and a client 2 as a client playing the media stream of the team live stream. During actual implementation, at least two clients 1 are included, and any number of the client 2 is allowed.

An interaction process of the target application server, the live streaming server, the anchor clients and the audience client is as follows.

S401, the target application server establishes and sends the team forming indication information to the live streaming server, wherein the team forming indication information includes account information of at least two objects in the same team in the target application.

Before S401, the at least two objects log in the target application through the account information and form a team in the target application.

In some embodiments, the team forming indication information may include account information of all objects in the same team in the target application, or may only include account information of part of the objects in the same team.

S402, the live streaming server acquires live streaming identification information of an object corresponding to the team forming indication information and participating in the team live stream.

In some embodiments, the object participating in the team live stream may be acquired through the following steps including but not limited to S4021 to S4023.

S4021, the live streaming server sends a team live streaming confirming message to clients corresponding to the account information of at least two objects in the team forming indication information.

In some embodiments, when the live streaming server sends a team live streaming confirming message to clients corresponding to the account information of at least two objects, the team live streaming confirming message may be directly sent to a client, which is performing a live stream, corresponding to the account information of at least one object.

S4022, the clients corresponding to the account information of at least two objects receive the team live streaming confirming message and sends response messages to the live streaming server.

In some embodiments, the clients display the team live streaming confirming messages after receiving the team live streaming confirming message, and send the response messages to the live streaming server based on indication of corresponding objects.

S4023, the live streaming server uses objects corresponding to the response messages indicating to participate in the team live stream as the objects participating in the team live stream.

Specific contents and mode of the team live streaming confirming message are not limited, for example, the team live streaming confirming message may be set to be "whether participate in the team live stream with a anchor XX" or "whether participate in the team live stream", etc., wherein "XX" may refer to a name of a anchor, etc. The specific contents and mode of the response message are not limited, for example, the response message may be but is not limited to "confirmed to participate in the team live stream" or "refuse to participate in the team live stream", etc. The response message indicates to participate in the team live stream may be but is not limited to "confirmed to participate in the team live stream". In some embodiments, after S4023, the live streaming server may further confirm the number of objects participating in the team live stream. In response to that the number of the objects participating in the team live stream is larger than a first preset threshold, live streaming identification information of the object participating in the team live stream is acquired.

In some embodiments, after S4023, the following steps may be further included.

S4024, the live streaming server knows that the number of the objects participating in the team live stream is not larger than the first preset threshold and then sends first team forming failure signaling to the client corresponding to the object participating in the live stream to indicate that the team live stream fails this time.

S4025, the client corresponding to the object participating in the live stream receives and displays the first team forming failure signaling, and thus the object participating in the team live stream may know that the team live stream fails this time through the first team forming failure signaling displayed on the client.

In some embodiments, after S4023, the following steps may be included.

S4026, the live streaming server acquires the live streaming identification information of the object participating in the team live stream after knowing that the number of the objects participating in the team live stream is larger than the first preset threshold to enter S403.

The first preset threshold is not limited too much, and may be but is not limited to be set as a positive integer larger than 1. Specific contents and mode of the first team forming failure signaling are not limited too much and may be set by those skilled in the art based on actual demands, for example, the first team forming failure signaling is set as "the team live stream fails this time" or "the team live stream is unavailable", etc.

S403, the live streaming server sends the live streaming identification information to the client used for the team live stream and the client playing the media stream of the team live stream.

In some embodiments, after an object corresponding to the client 1 confirms to participate in the team live stream, an identity of the client 1 is changed to the client used for the team live stream; and the object corresponding to the client 1 watches the media stream of the team live stream after refusing to participate in the team live stream, the identity of the client 1 is changed to the client playing the media stream of the team live stream.

The live streaming server may send the live streaming identification information of other objects participating in the team live stream apart from an object corresponding to a to-be-sent client used for the team live stream to the to-be-sent client used for the team live stream when sending the live streaming identification information to the client used for the team live stream. For example, when the objects participating in the team live stream include A, B and C and corresponding clients are client A, client B and client C respectively, the live streaming identification information of B and C is sent to the client A, the live streaming identification information of A and C is sent to the client B, and the live streaming identification information of A and B is sent to the client C.

When the live streaming server sends the live streaming identification information to the client playing the media stream of the team live stream, all confirmed live streaming identification information may be sent to the client playing the media stream of the team live stream, for example, when the objects participating in the team live stream include A, B and C, the live streaming identification information of A, B and C is sent to the client playing the media stream of the team live stream.

S404, the client used for the team live stream and the client playing the team live streaming media flow display part of or all of the live streaming identification information.

At least two objects participating in the team live stream should be included. Thus at least two pieces of live streaming identification information should be included, and the client used for the team live stream and the client playing the media stream of the team live stream display part of or all of the live streaming identification information.

In some embodiments, the live streaming identification may include but is not included to one or more of live streaming account profile photos of the objects, live streaming account information and identification information in a live streaming room.

Each of the clients include by is not limited to the following manners for displaying each of the live streaming identification information.

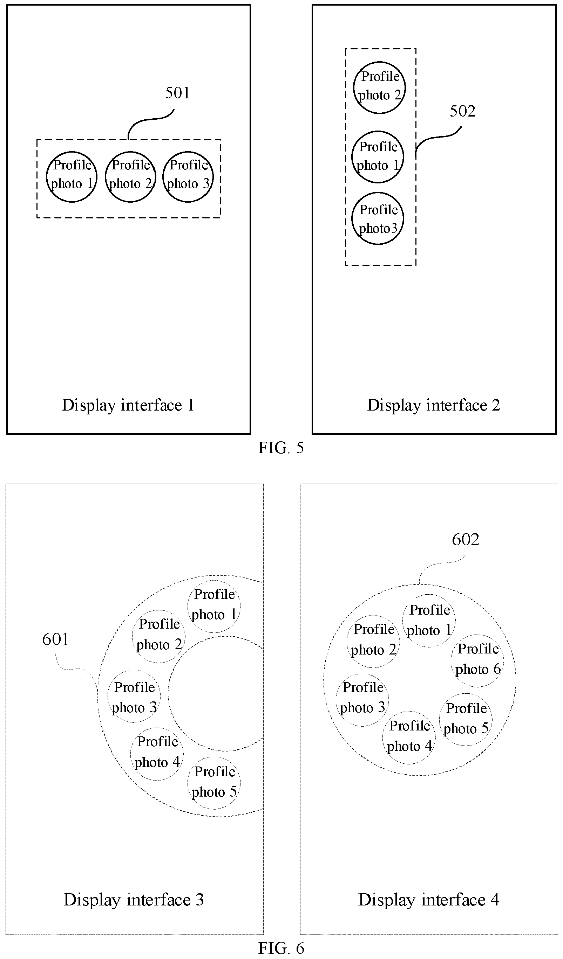

Each of the live streaming identification information is displayed in a rectangular region, or a sector region or a circular region, etc. For example, when the live streaming identification information is the live streaming account profile photos, each of the clients may be but is not limited to displaying each of the live streaming account profile photos in a rectangular region 501 or 502 of a display interface shown in FIG. 5, or displaying each of the live streaming account profile photos in a sector region 601 or a circular region 602 of the display interface shown in FIG. 6.

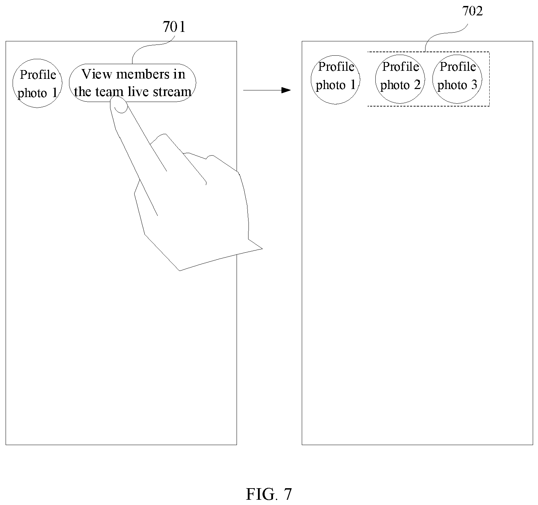

In some embodiments, when the client playing the media stream of the team live stream displays the live streaming identification information, other live streaming identification information may be displayed above, below, on the left side, on the right side, etc. of the live streaming identification information of the object corresponding to the current watched media stream of the team live stream. With reference to FIG. 7, a profile photo 1 is the live streaming identification information of the object corresponding to the current watched media stream of the team live stream. The object watching the media stream of the team live stream may click a press key 701 for looking through members in the team live stream. The live streaming identification information, e.g., a profile photo 2, a profile photo 3, etc. of other objects in the team live stream together with the object corresponding to profile photo 1 is displayed in a region 702 on the right side of the profile photo 1.

The profile photo 1 to the profile photo 5 in the FIG. 5 to FIG. 7 refer to the live streaming identification information of the objects participating in the team live stream, and the number may be larger than or smaller than the number shown in Fig 5 to FIG. 7.

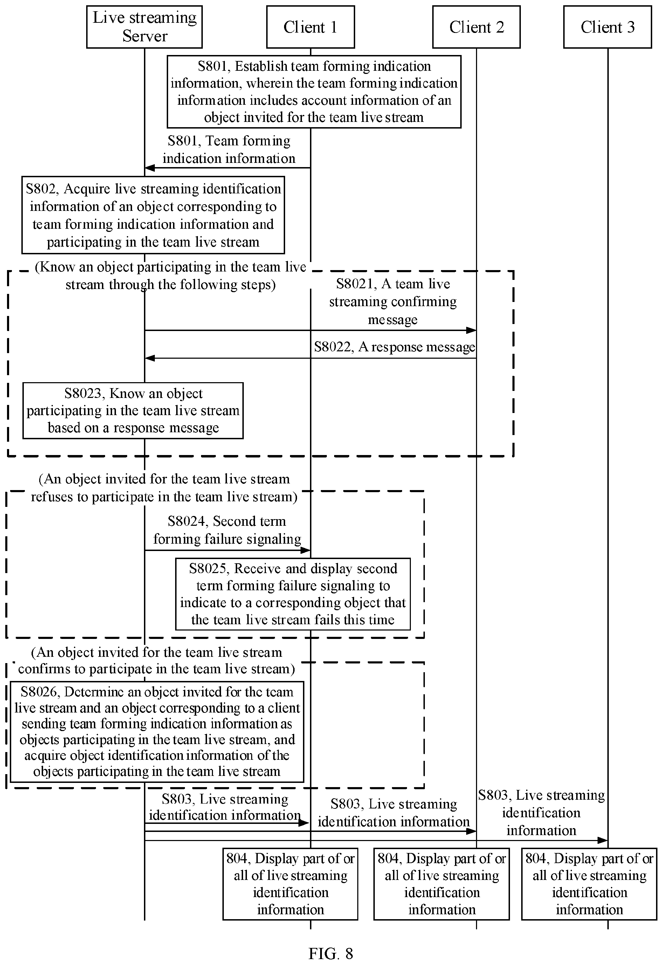

In some embodiments, in response to that the team forming indication information is sent by any anchor client, the anchor client sends the team forming indication information to the live streaming server, the live streaming server invites the objects corresponding to the account information in the team forming indication information to participate in the team live stream. FIG. 8 shows an interaction process of the live streaming server, the anchor clients and the audience client. In some embodiments, in FIG. 8, the client 1 represents the client sending the team forming indication information, and the client 2 represents the client corresponding to the object invited for the team live stream.

S801, any client establishes and sends the team forming indication information to the live streaming server, wherein the team forming indication information includes account information of the object invited for the team live stream.

The objects corresponding to the client 1 and the client 2 may be but are not limited to the objects in the same team in the target application.

Before S801, the object corresponding to any client and the object invited for the team live stream log in the target application through the account information and form the same team in the target application.

S802, the live streaming server acquires the live streaming identification information of the object corresponding to the team forming indication information and participating in the team live stream.

In some embodiments, the object participating in the team live stream may be acquired through the following steps, namely S8021 to S8023.

S8021, the live streaming server sends the team live streaming confirming message to the client corresponding to the account information of the object invited for the team live stream.

In some embodiments, the live streaming server directly sends the team live streaming confirming message to the client, which is performing a live stream, corresponding to the account information of the invited object when sending the team live streaming confirming message to the clients corresponding to the account information of the object invited for the team live stream.

S8022, the client corresponding to the account information of the object invited for the team live stream receive the team live streaming confirming message and send a response message to the live streaming server.

In some embodiments, the client corresponding to the account information of the object invited for the team live stream displays the team live streaming confirming message after receiving the team live streaming confirming message, and send the response message to the live streaming server based on indication of the object invited for the team live stream.

Specific contents and mode of the response message may refer to the contents mentioned above and will not be repeated herein.

S8023, the live streaming server uses the object corresponding to the response message indicating to participate in the team live stream and invited for the team live stream and the object corresponding to the client sending the team forming indication information as the objects participating in the team live stream based on the response message of the client corresponding to the object invited for the team live stream. Specifically, the object invited for the team live stream may refuse to participate in the team live stream, or may confirm to participate in the team live stream. When the object invited for the team live stream refuses to participate in the team live stream, the steps may include but are not limited S8024 and S8025 as follows.

S8024, the live streaming server knows that the objects invited for the team live stream refuse to participate in the team live stream based on the response message, then sends a second team forming failure signaling to the client sending the team forming indication information to indicate that the team live stream this time fails.

Namely, when the response messages indicate that the objects invited for the team live stream refuse to participate in the team live stream, the live streaming server sends the second team forming failure signaling to the client sending the team forming indication information.

S8025, the client sending the team forming indication information receives and displays the second team forming failure signaling, and thus the object sending the team forming indication information may know that the team live stream fails this time through the second team forming failure signaling displayed on the client.

When the objects invited for the team live stream confirm to participate in the team live stream, the steps may include but are not limited to S8026 as follows.

S8026, the live streaming server knows that the objects invited for the team live stream participate in the team live stream, the objects corresponding to the response message indicating to participate in the team live stream and invited for the team live stream and the object corresponding to the client sending the team forming indication information are used as the objects participating in the team live stream, and live streaming identification information of the objects participating in the team live stream is acquired to enter S803.

The specific contents and the mode of the team live streaming confirming message are not limited, for example, the team live streaming confirming message may be set to be "whether participate in the team live stream with a anchor XX" or "whether participate in the team live stream", etc., wherein "XX" may refer to a name of a anchor, etc. The specific contents and the mode of the response message are not limited, for example, the response message may be but is not limited to "confirmed to participate in the team live stream" or "refuse to participate in the team live stream", etc. The response message indicates to participate in the team live stream may be but is not limited to "confirmed to participate in the team live stream".

Specific contents and mode of the second team forming failure signaling are not limited too much and may be set by those skilled in the art based on actual demands, for example, the second team forming failure signaling is set as "invited objects refuse to participate in the team live stream" or "the team live stream is unavailable", etc.

S803, the live streaming server sends the live streaming identification information to the client used for the team live stream and the client playing the media stream of the team live stream.

In some embodiments, if the object corresponding to the client 2 confirms to participate in the team live stream, and the client 1 and the client 2 are the clients used for the team live stream.

The specific implementation process of S803 may refer to description of S403 and will not be repeated herein.

S804, the client used for the team live stream and the client playing the media stream of the team live stream display part of or all of the live streaming identification information.

The specific implementation process of S804 may refer to description of S404 and will not be repeated herein.

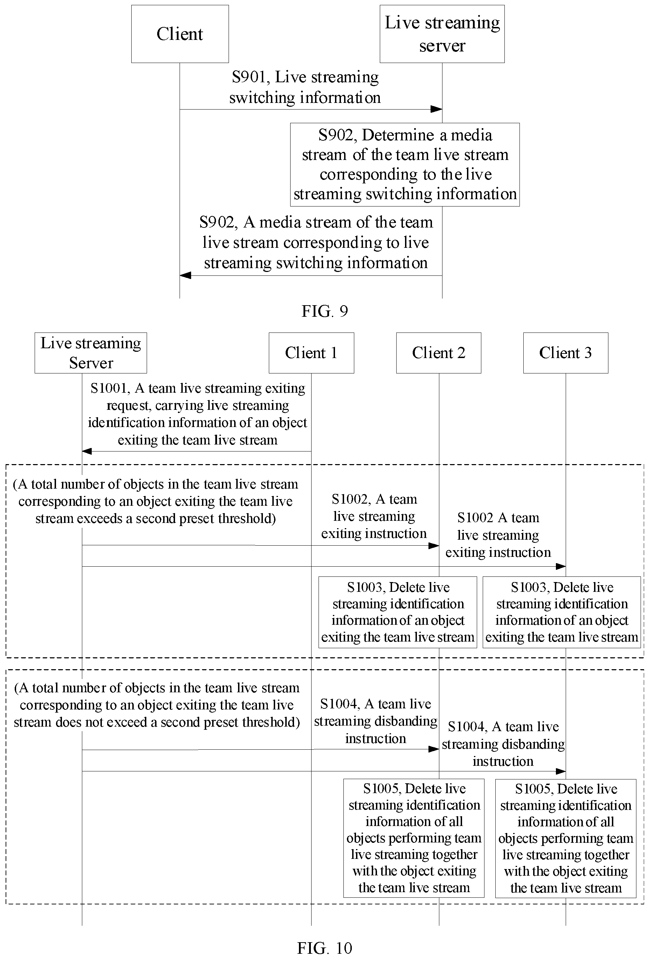

In some embodiments, after S404 or S804, the audience watching media stream of the team live stream or the anchor may perform a preset operation on the live streaming identification information to switch the media stream of the team live stream. Please see FIG. 9, an interaction between the client and the live streaming server is as follows.

S901, the client sends the live streaming switching information to the live streaming server, wherein the live streaming switching information is generated by a preset operation on any live streaming identification information.

Namely, the objects using the clients may perform a preset operation on any displayed live streaming identification information to trigger the live streaming switching information. The preset operation is not limited too much, e.g., clicking the live streaming identification information or long pressing the live streaming identification information, etc.

S902, the live streaming client receives the live streaming switching information, and pushes the media stream of the team live stream corresponding to the live streaming switching information to the client sending the live streaming switching information.

In some embodiments, the live streaming client determines the object corresponding to the live streaming switching information, and the media stream of the live stream of the object is used as the media stream of the team live stream to be pushed to the client sending the live streaming switching information.

S903, the client receives the media stream of the team live stream pushed by the live streaming server and plays the media stream of the team live stream.

In some embodiments, each of the objects participating in the team live stream may request for exiting the team live stream. As shown in FIG. 10, FIG. 10 makes description by using the client 1 as a client corresponding to an object exiting the team live stream, the client 2 as clients corresponding to the other objects participating in the team live stream, and a client 3 as the client corresponding to the object watching the team live stream. The process specifically includes the following steps.

S1001, the client corresponding to the object participating in the team live stream sends a team live streaming exiting request to the live streaming server, wherein the team live streaming exiting request carries live streaming identification information of the object exiting the team live stream.

When the object participating in the team live stream wants to exit the team live stream, the object participating in the team live stream may trigger the request for exiting the team live stream through the client.

After S1001, the live streaming server sends a team live streaming exiting instruction or a team live streaming disbanding instruction based on the team live streaming exiting request, specifically, including the following situation.

S1002, the live streaming server knows that the total number of the objects in the team live stream corresponding to the objects exiting the team live stream exceeds a second preset threshold, and then sends the team live streaming exiting instruction to the client used for the team live stream and the client playing the media stream of the team live stream.

The live streaming server may not send the team live streaming exiting instruction but send signaling for succeeding in exiting the team live stream, etc. to the client corresponding to the object exiting the team live stream, which may be set flexibly by those skilled in the art.

The second preset threshold is not limited too much and may be but is not limited to a positive integer larger than 3.

S1003, the client used for the team live stream and the client playing the media stream of the team live stream receive the team live streaming exiting instruction and delete the live streaming identification information of the object exiting the team live stream.

As shown in FIG. 10, if the team live streaming exiting request is sent by the client 1, the live streaming identification information of the object corresponding to the client 1 is deleted in this step.

In some embodiments, after S1001, the following steps are included.

S1004, the live streaming server knows that the total number of the objects in the team live stream corresponding to the objects exiting the team live stream does not exceed the second preset threshold, and then sends the team live streaming disbanding instruction to the client used for the team live stream and the client playing the media stream of the team live stream.

S1005, the client used for the team live stream and the client playing the media stream of the team live stream receive the team live streaming disbanding instruction and delete the live streaming identification information of all the objects corresponding to the team live stream.

As shown in FIG. 10, the team live streaming exiting request is sent by the client 1, the live streaming identification information of all the objects in the team live stream together with the client 1 is deleted in this step.

An embodiment of the present application further provides a method for logging in a target application through live streaming account information for objects, specifically as follows.

S1, a live streaming application distributes live streaming platform identification information to the target application and stores its own code.

The live streaming platform identification information may be identification information of an application or a platform used for the live stream.

S2, each of the objects logs in the target application though the live streaming account information.

S3, the target application carries its own identification information to enter a log-in interface of the live streaming platform, and checks an output information rank of the objects, wherein the information rank may include but is not limited to log-in profile photos of the objects.

S4, the live streaming application returns a token of each user after the objects successfully log in the target application.

S5, each of the objects visits a successful log-in interface of the target application by using the token.

S6, the target application requests the live streaming application for verification information by using the token and the live streaming platform identification information.

The verification information may be but is not limited to associating the target application with live streaming account information of each of the objects.

S7, after finishing verifying, the live streaming application returns a result message and object information of the objects to the target application, wherein the object information may include but is not limited to the log-in profile photos and unique identification information of the objects, etc.

S8, the target application establishes account information or is associated with account information the objects already have and records the unique identification information of the objects, etc.

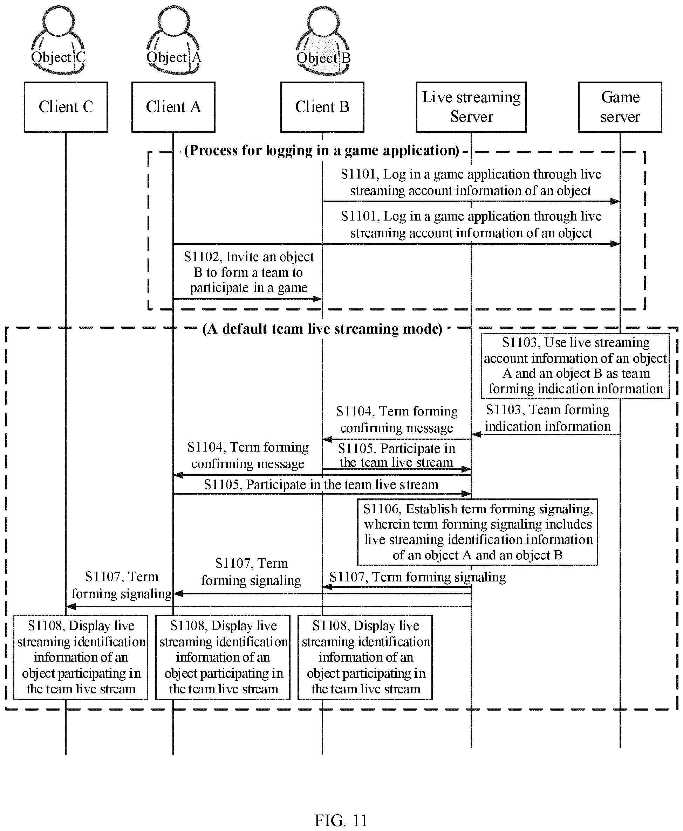

One example of team live streaming is given below. In the example, the target application is a game application. The objects log in the game application through the live streaming account information. The example uses a client A and a client B as clients used by an object A and an object B in the team live stream in the game application, and a client C as a client used by an object C watching a media stream of the team live stream. As shown in FIG. 11, the team live stream in the example may include one or two processes as follows.

First, it is a game application log-in process.

S1101, the client A and the client B log in the game application through the live streaming account information of the objects.

S1102, the object A invites the object B through the client A to form a team to participate in a game in the game application.

Second, it is a default team live streaming mode.

In the mode, a live streaming system invites all the objects in the same team in the game application in a default mode to participate in the team live stream.

S1103, a game server uses the live streaming account information of the object A and the object B as team forming indication information, and sends the team forming indication information to a live streaming server.

S1104, the live streaming server sends a team forming confirming message to the client A and the client B based on the team forming indication information.

The live streaming server determines the objects in the same team in the game application based on the team forming indication information, and sends the team forming confirming message to the clients corresponding to the determined objects. In the example, the object A and the object B are in the same team in the game application, so that the live streaming server sends the team forming confirming message to the client A and the client B.

S1105, after receiving the team forming confirming message, the client A and the client B send response messages to the live streaming server based on indications of the object A and the object B.

In some embodiments, if both the object A and the object B confirm to participate in the team live stream, the response messages sent by the client A and the client B to the live streaming server may be response messages indicating to participate in the team live stream.

S1106, the live streaming server knows the objects participating in the team live stream based on the response messages of the client A and the client B, and establishes team forming signaling based on live streaming identification information of the objects participating in the team live stream.

The live streaming server confirms that the object A and the object B participate in the team live stream, and the team forming signaling carries live streaming identification information of the object A and the live streaming identification information of the object B and may further include identification information of a team of the team live stream, etc., which may be set by those skilled in the art based on actual demands.

S1107, the live streaming server sends the team forming signaling to the client A, the client B and the client C.

S1108, the client A, the client B and the client C display team information carried in the team forming signal, wherein the team information may include live streaming identification information of the objects participating in the team live stream.

Namely, the client A, the client B and the client C display live streaming identification information of the objects in the team live stream and may further display other information, e.g., the identification information of the team in the team live stream, etc. carried in the team forming signaling.

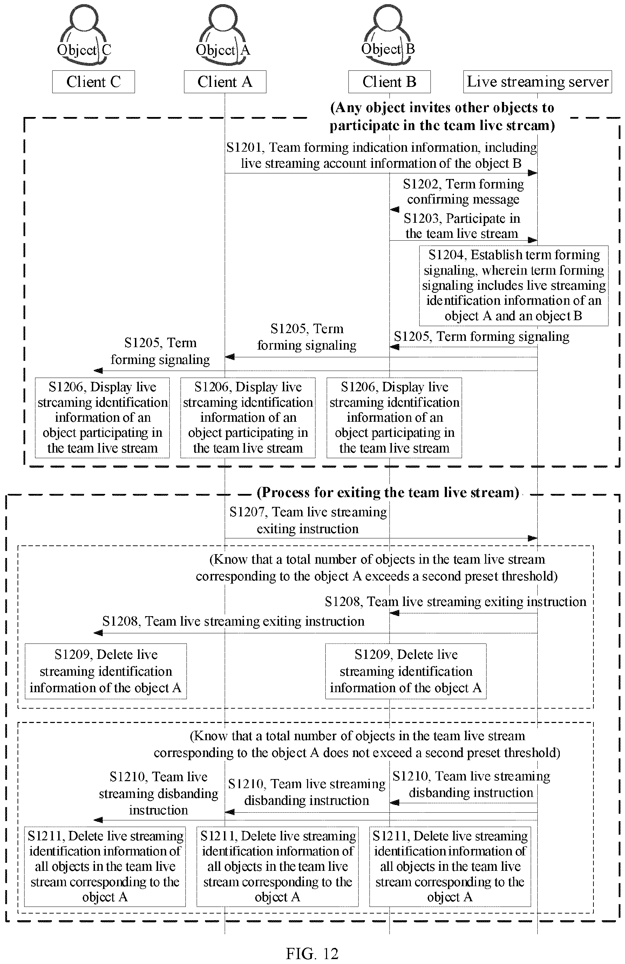

As shown in FIG. 12, the team live stream in the example may include one or two process as follows.

First, any object invites the other objects to participate in the team live stream.

S1201, the object A sends the team forming indication information to the live streaming server through the client A, wherein the team forming indication information includes live streaming account information of the object B.

S1202, the live streaming server sends the team forming confirming message to the client B.

S1203, after receiving the team forming confirming message, the client B sends the response message to the live streaming server based on indication of the object B.

In the example, if the object B indicates that he confirms to participate in the team live stream, the response message sent by the client B is the response message indicating to participate in the team live stream.

S1204, the live streaming server knows the objects participating in the team live stream based on the response message of the client B, and establishes the team forming signaling based on the live streaming identification information of the objects participating in the team live stream.

The live streaming server knows that the object participates in the team live stream, then the object A and the object B are used as the objects participating in the team live stream, and the live streaming identification information of the object A and the live streaming identification information of the object B are used as the team forming signaling, wherein the team forming signaling may further include the identification information of the team of the object A and the object B in the team live stream.

S1205, the live streaming server sends the team forming signaling to the client A, the client B and the client C.

S1206, the client A, the client B and the client C display the team information carried in the team forming signaling, wherein the team information may include live streaming identification information of the objects participating in the team live stream.

Namely, the client A, the client B and the client C display the live streaming identification information of the objects in the team live stream and may further display other information, e.g., the identification information of the team of the team live stream, etc. carried in the team forming signaling.

Second, a process of exiting the team live stream is shown as below.

S1207, the object A sends a team live streaming exiting instruction to the live streaming server through the client A, wherein the team live streaming exiting instruction may carry the live streaming identification information of the object A.

After S1207, the following two situations exist.

The first situation includes S1208 and S1209 as follows, and the second situation includes S1210 and S1211 as follows.

S1208, the live streaming server knows that the total number of the objects in the team live stream corresponding to the object A exceeds a second preset threshold, and sends the team live streaming exiting instruction to the client B and the client C.

In this step, signaling for succeeding in exiting the team live stream may be further sent to the client A.

S1209, the client B and the client C receive the team live streaming exiting signaling, and delete the live streaming identification information of the object A.

S1210, the live streaming server knows that the total number of the objects in the team live stream corresponding to the object A exceeds a second preset threshold, and sends a team live streaming disbanding instruction to the client A, the client B and the client C.

S1211, the client A, the client B and the client C delete the live streaming identification information of all the objects in the team live stream corresponding to the object A.

Namely, in the example, each of the clients deletes the live streaming identification information of the object A and the live streaming identification information of the object B.

In the solution provided by the present application, the live streaming server directly determines the live streaming identification information of the objects participating in the team live stream and sends the live streaming identification information to all the clients, then the live streaming identification information is displayed on the clients, so that the process of acquiring the live streaming identification information of the objects in the team live stream by the objects using the clients is more convenient and better real-time, the live streaming identification information is sent by the server, and thus the accuracy of the acquired live streaming identification information is improved.

In some embodiments, each of the clients displays part of or all of the live streaming identification information, thus each of the objects may switch media stream of the live streams of the different objects in the team live stream through the live streaming identification information displayed on the client, the process is simple, convenient and fast, time delay of switching the media stream of the live streams may be reduced and calculated in seconds, and user experience is greatly improved.

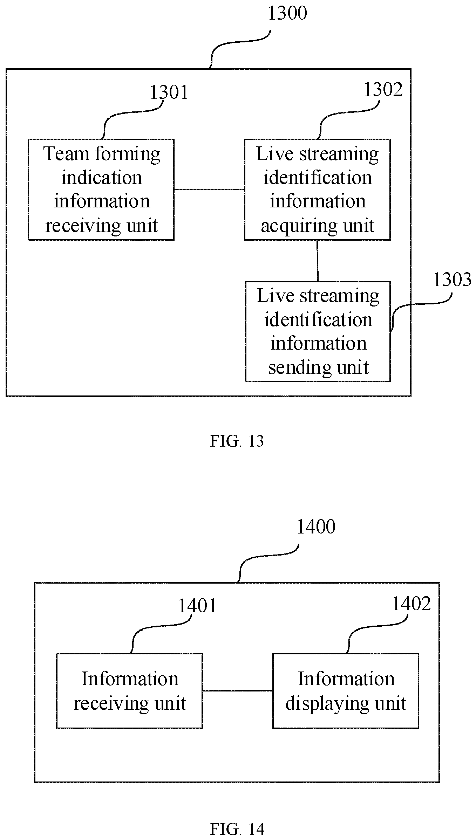

As shown in FIG. 13, based on the same inventive concept, an embodiment of the present application further provides a live streaming apparatus 1300, including a team forming indication information receiving unit 1301, a live streaming identification information acquiring unit 1302, and a live streaming identification information sending unit 1303, wherein:
the team forming indication information receiving unit 1301 is configured to receive team forming indication information, and the team forming indication information includes account information of at least one object in one same team in a target application;
the live streaming identification information acquiring unit 1302 is configured to acquire live streaming identification information of an object corresponding to account information of at least one object and participating in the team live stream; and
the live streaming identification information sending unit 1303 is configured to send the acquired live streaming identification information to a client used for the team live stream and a client playing a media stream of the team live stream to make the client used for the team live stream and the client playing the media stream display part of or all of the live streaming identification information.

In some embodiments, the live streaming identification information sending unit 1303 may be further configured to execute the following: after sending the acquired live streaming identification information to the client used for the team live stream and the client playing the media stream of the team live stream, live streaming switching information sent by the client playing the media stream of the team live stream is received, which is triggered by a preset operation on any live streaming identification information; and the media stream of the team live stream corresponding to the any live streaming identification information is pushed to the client sending the live streaming switching information.

As one embodiment, the live streaming identification information acquiring unit 1302 is further configured to execute the following: the object corresponding to account information of at least one object and participating in the team live stream is known through the following manners: if the account information is non-live-streaming account information, live streaming account information corresponding to the at least one piece of non-live-streaming account information is acquired, an object corresponding to the live streaming account information is used as the object participating in the team live stream; or if the account information is the live streaming account information, an object corresponding to the at least one piece of live streaming account information is used as the object participating in the team live stream.

As one embodiment, the team forming indication information is sent by a target application server and includes account information of at least two objects. The live streaming identification information acquiring unit 1302 is specifically configured to acquire the live streaming identification information of an object corresponding to account information of at least one object and participating in the team live stream through the following manner: a team live streaming confirming message is sent to clients corresponding to the account information of the at least two objects; based on a response message of the clients corresponding to the account information of the at least two objects, an object corresponding to the response message indicating to participate in the team live stream is used as the object participating in the team live stream; and the live streaming identification information of the object participating in the team live stream is acquired.

As one embodiment, the live streaming identification information acquiring unit 1302 is further configured to execute the following: based on the response message of the clients corresponding to the account information of the at least two objects, the object corresponding to the response message indicating to participate in the team live stream is used as the object participating in the team live stream, then if the number of the objects participating in the team live stream is larger than a first preset threshold, the live streaming identification information of the object participating in the team live stream is acquired.

As one embodiment, the live streaming identification information acquiring unit 1302 is further configured to execute the following: if the number of the objects participating in the team live stream is not larger than the first preset threshold, first team forming failure signaling is sent to the client corresponding to the object participating in the live stream to indicate that the team live stream fails this time.

As one embodiment, the live streaming identification information acquiring unit 1302 is further configured to execute the following: the team live streaming confirming message is sent to the client, which is performing a live stream, corresponding to the account information of the at least one object.

As one embodiment, the team forming indication information is sent by the client and includes account information of the object invited for the team live stream. The live streaming identification information acquiring unit 1302 is specifically configured to acquire the live streaming identification information of the object corresponding to the account information of the at least one object and participating in the team live stream through the following manner: the team live streaming confirming message is sent to the client corresponding to the account information of the object invited for the team live stream; the response message of the client corresponding to the account information of the object invited for the team live stream is received, and the object corresponding to the response message indicating to participate in the team live stream and invited for the team live stream and the object corresponding to the client sending the team forming indication information are used as the objects participating in the team live stream; and the live streaming identification information of the objects participating in the team live stream is acquired.

As one embodiment, the live streaming identification information acquiring unit 1302 is further configured to execute the following: after sending the team live streaming confirming message to the client corresponding to the account information of the object invited for the team live stream, if the response message indicates that the object invited for the team live stream refuses to participate in the team live stream, second team forming failure signaling is sent to the client sending the team forming indication information to indicate that the team live stream fails this time.

As one embodiment, the live streaming identification information acquiring unit 1302 is further configured to execute the following: the team live streaming confirming message is sent to the client, which is performing a live stream, corresponding to the account information of the invited object.

As one embodiment, the live streaming identification information sending unit 1303 is further configured to execute the following: after sending the acquired live streaming identification information to the client used for the team live stream and the client playing the media stream of the team live stream, a team live streaming exiting request triggered by an object participating in the team live stream through the client is received and carries live streaming identification information of the object exiting the team live stream; and if the total number of objects in the team live stream corresponding to the object exiting the team live stream exceeds a second preset threshold, the team live streaming exiting instruction is sent to the client used for the team live stream and the client playing the media stream of the team live stream to instruct that the client used for the team live stream and the client playing the media stream of the team live stream delete the live streaming identification information of the object exiting the team live stream.

As one embodiment, the live streaming identification information sending unit 1303 is further configured to execute the following: if the total number of the objects in the team live stream corresponding to the object exiting the team live stream does not exceed the second preset threshold, a team live streaming disbanding instruction is sent to the client used for the team live stream and the client playing the media stream of the team live stream to instruct that the client used for the team live stream and the client playing the media stream of the team live stream delete the live streaming identification information of all the objects corresponding to the team live stream.

As shown in FIG. 14, based on the same inventive concept, an embodiment of the present application further provides a live streaming apparatus 1400, including an information receiving unit 1401 and an information displaying unit 1402, wherein:
the information receiving unit 1401 is configured to receive live streaming identification information of an object participating in the team live stream sent by a live streaming server, wherein the live streaming identification information is acquired by the live streaming server based on received team forming indication information, and the team forming indication information includes account information of at least one object in one same team in a target application; and
the information displaying unit 1402 is configured to display part of or all of the live streaming identification information.

As one embodiment, the information displaying unit 1402 is further configured to execute the following: after displaying part of or all of the live streaming identification information, live streaming switching information is sent to a live streaming server, which is triggered by a preset operation on any live streaming identification information; and a media stream of the team live stream sent by the live streaming server and corresponding to the any live streaming identification information is received.

As one embodiment, the information receiving unit 1401 is further configured to execute the following: a team live streaming confirming message is received, which is sent after the live streaming server receives the team forming indication information; and a response message is sent to the live streaming server to make the live streaming server use an object corresponding to the response message indicating to participate in the team live stream as an object participating in the team live stream.

As one embodiment, the team forming indication information is sent by a target application server and includes account information of at least two objects. The information receiving unit 1401 is further configured to execute the following: after sending the response message to the live streaming server, first team forming failure signaling is received, which is sent after the live streaming server knows that the number of the objects participating in the team live stream is not larger than a first preset threshold based on the response message of clients corresponding to the account information of the at least two objects.

As one embodiment, the information receiving unit 1401 is further configured to execute the following: before step of receiving the team live streaming confirming message sent by the live streaming server, the team forming indication information is sent to the live streaming server, which includes account information of the object invited for the team live stream.

As one embodiment, the information receiving unit 1401 is further configured to execute the following: after sending the team forming indication information to the live streaming server, second team forming failure signaling is received, which is sent after the live streaming server knows that the object invited for the team live stream refuses to participate in the team live stream based on the response message of the client corresponding to the object invited for the team live stream.

As one embodiment, the information displaying unit 1402 is further configured to execute the following: after the step of displaying part of or all of the live streaming identification information, the team live streaming exiting instruction is received, and the live streaming identification information of the object exiting the team live stream indicated by the team live streaming exiting instruction is deleted, wherein the team live streaming exiting instruction is sent after the live streaming server knows that the number of the objects in the team live stream corresponding to the object exiting the team live stream exceeds the second preset threshold based on a team live streaming exiting request, and the team live streaming exiting request is triggered by the object exiting the team live stream through the client; or the team live streaming disbanding instruction is received, and the live streaming identification information of all the objects in the team live stream corresponding to the team live streaming disbanding instruction is deleted, wherein the team live streaming disbanding instruction is sent after the live streaming server knows that the total number of the objects in the team live stream corresponding to the object exiting the team live stream does not exceed the second preset threshold based on the team live streaming exiting request, and the team live streaming exiting request is triggered by the object exiting the team live stream through the client.

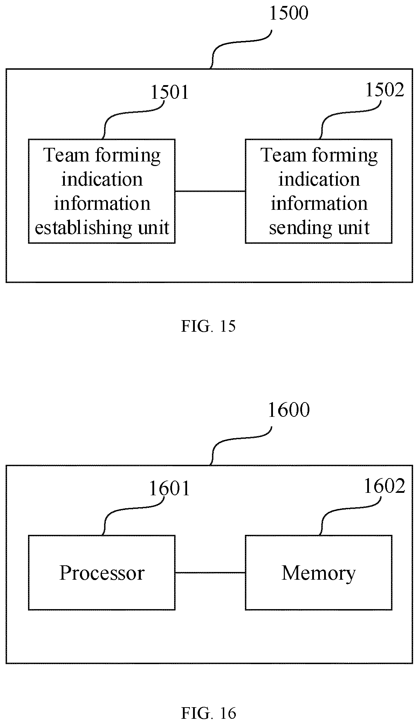

As shown in FIG. 15, based on the same inventive concept, an embodiment of the present application further provides a live streaming apparatus 1500, including a team forming indication information establishing unit 1501 and a team forming indication information sending unit 1502, wherein:
the team forming indication information establishing unit 1501 is configured to establish team forming indication information, wherein the team forming indication information includes account information of at least two objects in the same team in a target application; and
the team forming indication information sending unit 1502 is configured to send the team forming indication information to a live streaming server, so that a live streaming client acquires live streaming identification information of an object corresponding to account information of at least one object and participating in the team live stream and sends the live streaming identification information to a client used for the team live stream and a client playing a media stream of the team live stream.

As shown in FIG. 16, an embodiment of the present application provides an electronic device 1600, including a processor 1601, and a memory 1602 used for storing instructions executable by the processor, wherein the processor 1601 is configured to execute the following process: team forming indication information is received, which includes account information of at least one object in one same team in a target application; live streaming identification information of an object corresponding to the account information of the at least one object and participating in the team live stream is acquired; and the acquired live streaming identification information is sent to a client used for the team live stream and a client playing a media stream of the team live stream to make the client used for the team live stream and the client playing the media stream display part of or all of the live streaming identification information.

As one embodiment, the processor 1601 is further configured to execute the following: after the step of sending the acquired live streaming identification information to the client used for the team live stream and the client playing the media stream of the team live stream, live streaming switching information sent by the client playing the media stream of the team live stream is received, which is triggered by a preset operation on any live streaming identification information; and the media stream of the team live stream corresponding to the any live streaming identification information is pushed to the client sending the live streaming switching information.

As one embodiment, the processor 1601 is further configured to execute the following: the object corresponding to the account information of the at least one object and participating in the team live stream is known through the following manner: if the account information is non-live-streaming account information, live streaming account information corresponding to the at least one piece of non-live-streaming account information is acquired, and the object corresponding to the live streaming account information is used as the object participating in the team live stream; or if the account information is the live streaming account information, the object corresponding to the at least one piece of live streaming account information is used as the object participating in the team live stream.

As one embodiment, the team forming indication information is sent by a target application server, which includes account information of at least two objects. The processor 1601 is further configured to execute the following: a team live streaming confirming message is sent to clients corresponding to the account information of the at least two objects; based on a response message of the clients corresponding to the account information of the at least two objects, an object corresponding to the response message indicating to participate in the team live stream is used as the object participating in the team live stream; and the live streaming identification information of the object participating in the team live stream is acquired.

As one embodiment, the processor 1601 is further configured to execute the following: based on the response message of the clients corresponding to the account information of the at least two objects, the object corresponding to the response message indicating to participate in the team live stream is used as the object participating in the team live stream, then if the number of the objects participating in the team live stream is larger than a first preset threshold, live streaming identification information of the objects participating in the team live stream is acquired.

As one embodiment, the processor 1601 is further configured to execute the following: if the number of the objects participating in the team live stream is not larger than the first preset threshold, first team forming failure signal is sent to the client to the client corresponding to the object participating in the live stream to indicate that the team live stream fails this time.

As one embodiment, the processor 1601 is further configured to execute the following: a team live streaming confirming message is sent to the client, which is performing a live stream, corresponding to the account information of the at least one object.

As one embodiment, the team forming indication information is sent by the client, which includes account information of the object invited for the team live stream. The processor 1601 is further configured to execute the following: the team live streaming confirming message is sent to the client corresponding to the account information of the object invited for the team live stream; a response message of the client corresponding to the account information of the object invited for the team live stream is received, and the object corresponding to the response message indicating to participate in the team live stream and invited fro team live streaming and the object corresponding to the client sending the team forming indication information are used as the object participating in the team live stream; and live streaming identification information of the object participating in the team live stream is acquired.

As one embodiment, the processor 1601 is further configured to execute the following: after the step of sending the team live streaming confirming message to the client corresponding to the account information of the object invited for the team live stream, if the response message indicates that the object invited for the team live stream refuses to participate in the team live stream, second team forming failure signaling is sent to the client sending the team forming indication information to indicate that the team live stream fails this time.

As one embodiment, the processor 1601 is further configured to execute the following: the team live streaming confirming message is sent to the client, which is performing a live stream, corresponding to the account information of the invited object.

As one embodiment, the processor 1601 is further configured to execute the following: after the acquired live streaming identification information is sent to the client used for the team live stream and the client playing the media stream of the team live stream, a team live streaming exiting request triggered by the object participating in the team live stream through the client is received, which carries the live streaming identification information of the object exiting the team live stream; and if the total number of the objects in the team live stream corresponding to the object exiting the team live stream exceeds the second preset threshold, a team live streaming exiting instruction is sent to the client used for the team live stream and the client playing the media stream of the team live stream to instruct that the client used for the team live stream and the client playing the media stream of the team live stream delete the live streaming identification information of the object exiting the team live stream.

As one embodiment, the processor 1601 is further configured to execute the following: if the total number of the objects in the team live stream corresponding to the object exiting the team live stream does not exceed the second preset threshold, a team live streaming disbanding instruction is sent to the client used for the team live stream and the client playing the media stream of the team live stream to instruct that the client used for the team live stream and the client playing the media stream of the team live stream delete the live streaming identification information of all the objects corresponding to the team live stream.

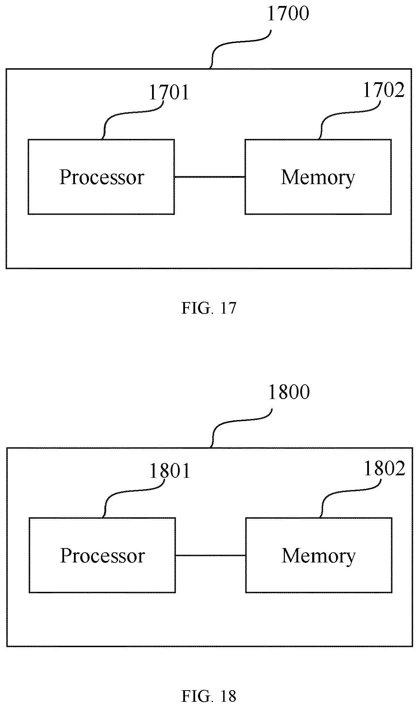

As shown in FIG. 17, an embodiment of the present application provides an electronic device 1700, including a processor 1701, and a memory 1702 used for storing instructions executable by the processor. The processor 1701 is configured to execute the following process: live streaming identification information of an object participating in the team live stream sent by a live streaming server is received, wherein the live streaming identification information is acquired by the live streaming server based on received team forming indication information, and the team forming indication information includes account information of at least one object in one same team in a target application; and part of or all of the live streaming identification information is displayed.

As one embodiment, the processor 1701 is further configured to execute the following: after the step of displaying part of or all of the live streaming identification information, live streaming switching information is sent to the live streaming server, and the live streaming switching information is generated by a preset operation on any live streaming identification information; and a media stream of the team live stream sent by the live streaming server and corresponding to the any live streaming identification information is received.

As one embodiment, the processor 1701 is further configured to execute the following: a team live streaming confirming message is received, and the team live streaming confirming message is sent after the live streaming server receives the team forming indication information; and a response message is sent to the live streaming serve to make the live streaming server use an object corresponding to the response message indicating to participate in the team live stream as the object participating in the team live stream.

As one embodiment, the team forming indication information is sent by a target application server and includes account information of at least two objects. The processor 1701 is further configured to execute the following: after sending a response message to the live streaming server, first team forming failure signaling is received, wherein the first team forming failure signaling is sent after the live streaming server knows that the number of the objects participating in the team live stream is not larger than a first preset threshold based on the response message of clients corresponding to the account information of the at least two objects.

As one embodiment, the processor 1701 is further configured to execute the following: before receiving the team live streaming confirming message sent by the live streaming server, the team forming indication information is sent to the live streaming server, wherein the team forming indication information includes account information of an object invited for the team live stream.

As one embodiment, the processor 1701 is further configured to execute the following: after sending the team forming indication information to the live streaming server, second team forming failure signaling is received, wherein the second team forming failure signaling is sent after the live streaming server knows that the object invited for the team live stream refuses to participate in the team live stream based on the response message of the client corresponding to the object invited for the team live stream.

As one embodiment, the processor 1701 is further configured to execute the following.

After the step of displaying part of or all of the live streaming identification information, a team live streaming exiting instruction is received, and live streaming identification information of the object exiting the team live stream indicated by the team live streaming exiting instruction is deleted, wherein the team live streaming exiting instruction is sent after the live streaming server knows that the total number of the objects in the team live stream corresponding to the object exiting the team live stream exceeds the second preset threshold based on a team live streaming exiting request, and the team live streaming exiting request is triggered by the object exiting the team live stream through the client; or after the step of displaying part of or all of the live streaming identification information, a team live streaming disbanding instruction is received, and live streaming identification information of all the objects in the team live stream corresponding to the team live streaming disbanding instruction is deleted, wherein the team live streaming disbanding instruction is sent after the live streaming server knows that the total number of the objects in the team live stream corresponding to the object exiting the team live stream does not exceed the second preset threshold based on the team live streaming exiting request, and the team live streaming exiting request is triggered by the object exiting the team live stream through the client.

As shown in FIG. 18, an embodiment of the present application provides an electronic device 1800, including a processor 1801 and a memory 1802 used for storing instructions executable by the processor. The processor 1801 is configured to execute the following process: team forming indication information is established, wherein the team forming indication information includes account information of at least two objects in the same team in a target application; and the team forming indication information is sent to a live streaming server, so that a live streaming client acquires live streaming identification information of an object corresponding to account information of the at least one object and participating in the team live stream and sends the live streaming identification information to a client used for the team live stream and a client playing a media stream of the team live stream.

An embodiment of the present application further provides a computer readable storage medium, carrying one or more computer instruction programs. When the computer instruction programs are executed by one or more processors, any live streaming method is executed by the one or more processors.

In an illustrative embodiment, a storage medium including instructions is further provided, e.g., a memory including the instructions. The instructions may be executed by a processor of an electronic device so as to complete the method. In some embodiments, the storage medium may be a non-temporary computer readable storage medium, e.g., ROM, random access memory (RAM), CD-ROM, a magnetic tape, a floppy disk, an optical data storage device, etc.

Those skilled in the art will easily comp up with other implementation solutions of the present application after considering the description and applying the present disclosure. The present application aims to cover any transformations, applications or adaptive changes of the embodiments of the present application. These transformations, applications or adaptive changes conform to a general principle of the embodiments of the present application and include common general knowledge or customary technical means which are not disclosed in the embodiments of the present application in the technical field. The description and the embodiments are only constructed as illustration. The real scope and spirit of the embodiments of the present application are shown in claims as follows.

## Claims

1. A live streaming method, applied to a live streaming server and comprising:
receiving team forming indication information, wherein the team forming indication information comprises account information of at least one object in one same team in a target application;
acquiring live streaming identification information of an object corresponding to the account information of the at least one object and participating in a team live stream; and
sending the acquired live streaming identification information to a client used for the team live stream and a client playing a media stream of the team live stream to make the client used for the team live stream and the client playing the media stream display part of or all of the live streaming identification information.

2. The method according to claim 1, further comprising:
receiving live streaming switching information sent by the client playing the media stream of the team live stream, wherein the live streaming switching information is generated by a preset operation on any live streaming identification information; and
pushing the media stream of the team live stream corresponding to the any live streaming identification information to the client sending the live streaming switching information.

3. The method according to claim 1, wherein said acquiring the object corresponding to the account information of the at least one object and participating in the team live stream comprises:
in response to that the account information is non-live-streaming account information, acquiring live streaming account information corresponding to the at least one piece of non-live-streaming account information and using an object corresponding to the live streaming account information as an object participating in the team live stream; and
in response to that the account information is the live streaming account information, using an object corresponding to the at least one piece of live streaming account information as the object participating in team live stream.

4. The method according to claim 1, wherein in response to that the team forming indication information is sent by a target application server and comprises account information of at least two objects, said acquiring the live streaming identification information of the object corresponding to the account information of the at least one object and participating in the team live stream comprises:
sending a team live streaming confirming message to clients corresponding to account information of at least two objects;
using objects corresponding to response messages indicating to participate in the team live stream as objects participating in the team live stream based on the response messages of the clients corresponding to the account information of the at least two objects; and
acquiring the live streaming identification information of the objects participating in the team live stream.

5. The method according to claim 4, wherein using the objects corresponding to the response messages indicating to participate in the team live stream as the objects participating in the team live stream based on the response messages of the clients corresponding to the account information of the at least two objects comprises:
in response to that a number of the objects participating in the team live stream is larger than a first preset threshold, acquiring live streaming identification information of the objects participating in the team live stream.

6. The method according to claim 5, further comprising:
in response to that the number of the objects participating in the team live stream is not larger than the first preset threshold, sending first team forming failure signaling to the client corresponding to the object participating in the team live stream to indicate that the team live stream fails this time.

7. The method according to claim 4, wherein sending the team live streaming confirming message to the client corresponding to the account information of the at least one object comprises:
sending the team live streaming confirming message to the client, which is performing a live stream, corresponding to the account information of the at least one object.

8. The method according to claim 1, wherein in response to that the team forming indication information is sent by a client and comprises account information of an object invited for the team live stream, said acquiring the live streaming identification information of the object corresponding to the account information of the at least one object and participating in the team live stream comprises:
sending a team live streaming confirming message to a client corresponding to the account information of the object invited for the team live stream;
receiving a response message of the client corresponding to the account information of the object invited for the team live stream, and using an object corresponding to the response message indicating to participate in the team live stream and invited for the team live stream and an object corresponding to the client sending the team forming indication information as the objects participating in the team live stream; and
acquiring the live streaming identification information of the objects participating in team live stream.

9. The method according to claim 8, wherein sending the team live streaming confirming message to the client corresponding to the account information of the object invited for the team live stream further comprises:
in response to that the response message indicates that the object invited for the team live stream refuses to participate in the team live stream, sending second team forming failure signaling to the client sending the team forming indication information to indicate that the team live stream fails this time.

10. The method according to claim 8, wherein sending the team live streaming confirming message to the client corresponding to the account information of the object invited for the team live stream comprises:
sending the team live streaming confirming message to the client, which is performing the live stream, corresponding to the account information of the invited object.

11. The method according to claim 1, after said sending the acquired live streaming identification information to the client used for the team live stream and the client playing the media stream of the team live stream, the method further comprises:
receiving a team live streaming exiting request triggered by the object participating in the team live stream through a client, wherein the team live streaming exiting request carries live streaming identification information of an object exiting the team live stream; and
in response to that a total number of the objects in the team live stream corresponding to the object exiting the team live stream exceeds a second preset threshold, sending a team live streaming exiting instruction to the client used for the team live stream and the client playing the media stream of the team live stream to instruct that the client used for the team live stream and the client playing the media stream of the team live stream delete the live streaming identification information of the object exiting the team live stream.

12. The method according to claim 11, further comprising:
in response to that the total number of the objects in the team live stream corresponding to the object exiting the team live stream does not exceed the second preset threshold, sending a team live streaming disbanding instruction to the client used for the team live stream and the client playing the media stream of the team live stream to instruct that the client used for the team live stream and the client playing the media stream of the team live stream delete the live streaming identification information of all the objects corresponding to the team live stream.

13. A live streaming method, applied to a client and comprising:
receiving live streaming identification information of an object participating in a team live stream sent by a live streaming server, wherein the live streaming identification information is acquired by the live streaming server based received team forming indication information, and the team live streaming information comprises account information of at least one object in one same team in a target application; and
displaying part of or all of the live streaming identification information.

14. The method according to claim 13, after said displaying part of or all of the live streaming identification information, the method further comprises:
sending live streaming switching information to the live streaming server, wherein the live streaming switching information is generated by a preset operation on any live streaming identification information; and
receiving a media stream of the team live stream sent by the live streaming server and corresponding to the any live streaming identification information.

15. The method according to claim 13, further comprising:
receiving a team live streaming confirming message, wherein the team live streaming confirming message is sent after the live streaming server receives the team forming indication information; and
sending a response message to the live streaming server to make the live streaming server use an object corresponding to the response message indicating to participate in the team live stream as the object participating in the team live stream.

16. The method according to claim 15, in the condition that the team forming indication information is sent by a target application server and comprising account information of at least two objects, after said sending the response message to the live streaming server, the method further comprises:
receiving first team forming failure signaling, wherein the first team forming failure signaling is sent after the live streaming server knows that a number of objects participating in the team live stream is not larger than a first preset threshold based on response messages of clients corresponding to the account information of the at least two objects.

17. The method according to claim 15, before said receiving the team live streaming confirming message sent by the live streaming server, the method further comprises:
sending the team forming indication information to the live streaming server, wherein the team forming indication information comprises account information of an object invited for the team live stream.

18. The method according to claim 17, after said sending the team forming indication information to the live streaming server, the method further comprises:
receiving second team forming failure signaling, wherein the second team forming failure signaling is sent after the live streaming server knows that the object invited for the team live stream refuses to participate in the team live stream based on a response message of a client corresponding to the object invited for the team live stream.

19. The method according to any one of claims 13 to 18, after said displaying part of or all of the live streaming identification information, the method further comprises:
receiving a team live streaming exiting instruction, and deleting live streaming identification information of an object exiting the team live stream indicated by the team live streaming exiting instruction, wherein the team live streaming exiting instruction is sent after the live streaming server knows that the total number of objects in the team live stream corresponding to the object exiting the team live stream exceeds a second preset threshold based on a team live streaming exiting request, and the team live streaming exiting request is triggered by the object exiting the team live stream through a client; or
receiving a team live streaming disbanding instruction, and deleting live streaming identification information of all objects in the team live stream corresponding to the team live streaming disbanding instruction, wherein the team live streaming disbanding instruction is sent after the live streaming server knows that the total number of the objects in the team live stream corresponding to the object exiting the team live stream does not exceed a second preset threshold based on the team live streaming exiting request, and the team live streaming exiting request is triggered by the object exiting the team live stream through the client.

20. A live streaming method, applied to a target application server and comprising:
establishing team forming indication information, wherein the team forming indication information comprises account information of at least two objects in one same team in a target application; and
sending the team forming indication information to a live streaming server, so that a live streaming client acquires live streaming identification information of an object corresponding to account information of at least one object and participating in a team live stream and sends the live streaming identification information to a client used for the team live stream and a client playing a media stream of the team live stream.

21. A live streaming apparatus, comprising a team forming indication information receiving unit, a live streaming identification information acquiring unit and a live streaming identification information sending unit, wherein:
the team forming indication information receiving unit is configured to receive team forming indication information, and the team forming indication information comprises account information of at least one object in one same team in a target application;
the live streaming identification information acquiring unit is configured to acquire live streaming identification information of an object corresponding to the account information of the at least one object and participating in the team live stream; and
the live streaming identification information sending unit is configured to send the acquired live streaming identification information to a client used for the team live stream and a client playing a media stream of the team live stream to make the client used for the team live stream and the client playing the media stream display part of or all of the live streaming identification information.

22. The apparatus according to claim 21, wherein the live streaming identification information sending unit is further configured to:
receive live streaming switching information sent by the client playing the media stream of the team live stream, wherein the live streaming switching information is generated by a preset operation on any live streaming identification information; and
push the media stream of the team live stream corresponding to the any live streaming identification information to the client sending the live streaming switching information.

23. The apparatus according to claim 21, wherein the live streaming identification information acquiring unit is further configured to:
in response to that the account information is non-live-streaming account information, acquire live streaming account information corresponding to the at least one piece of non-live-streaming account information, and using an object corresponding to the live streaming account information as an object participating in the team live stream; and
in response to that the account information is the live streaming account information, use an object corresponding to the at least one piece of live streaming account information as the object participating in the team live stream.

24. The apparatus according to claim 21, wherein the live streaming identification information acquiring unit is further configured to:
in response to that the team forming indication information is sent by a target application server and comprises account information of at least two objects, send a team live streaming confirming message to clients corresponding to account information of at least two objects;
use objects corresponding to response messages indicating to participate in the team live stream as objects participating in the team live stream based on the response messages of the clients corresponding to the account information of the at least two objects; and
acquire the live streaming identification information of the objects participating in the team live stream.

25. The apparatus according to claim 24, wherein the live streaming identification information acquiring unit is further configured to:
in response to that the number of the objects participating in the team live stream is larger than a first preset threshold, acquire live streaming identification information of the object participating in the team live stream after using objects corresponding to response messages indicating to participate in the team live stream as objects participating in the team live stream based on the response messages of the clients corresponding to the account information of the at least two objects.

26. The apparatus according to claim 25, wherein the live streaming identification information acquiring unit is further configured to:
in response to that the number of the objects participating in the team live stream is not larger than the first preset threshold, send first team forming failure signaling to the client corresponding to the object participating in the team live stream to indicate that the team live stream fails this time.

27. The apparatus according to claim 24, wherein the live streaming identification information acquiring unit is further configured to:
send the team live streaming confirming message to the client, which is performing a live stream, corresponding to the account information of the at least one object.

28. The apparatus according to claim 21, wherein the live streaming identification information acquiring unit is further configured to:
send the team live streaming confirming message to a client corresponding to the account information of the object invited for the team live stream in response to that the team forming indication information is sent by a client and comprises account information of an object invited for the team live stream;
receive a response message of the client corresponding to the account information of the object invited for the team live stream, and use the object corresponding to the response message indicating to participate in the team live stream and invited for the team live stream and an object corresponding to the client sending the team forming indication information as the objects participating in the team live stream; and
acquire the live streaming identification information of the objects participating in the team live stream.

29. The apparatus according to claim 28, wherein the live streaming identification information acquiring unit is further configured to:
send second team forming failure signaling to the client sending the team forming indication information to indicate that the team live stream fails this time in response to that the response message indicates that the object invited for the team live stream refuses to participate in the team live stream after the team live streaming confirming message is sent to the client corresponding to the account information of the object invited for the team live stream.

30. The apparatus according to claim 28, wherein the live streaming identification information acquiring unit is further configured to:
send the team live streaming confirming message to the client, which is performing a live stream, corresponding to the account information of the invited object.

31. The apparatus according to claim 21, wherein the live streaming identification information sending unit is further configured to:
receive a team live streaming exiting request triggered by an object participating in the team live stream through a client after the acquired live streaming identification information is sent to the client used for the team live stream and the client playing the media stream of the team live stream, wherein the team live streaming exiting request carries live streaming identification information of the object exiting the team live stream;
in response to that a total number of objects in the team live stream corresponding to an object exiting the team live stream exceeds a second preset threshold, senda team live streaming exiting instruction to the client used for the team live stream and the client playing the media stream of the team live stream to instruct that the client used for the team live stream and the client playing the media stream of the team live stream delete live streaming identification information of the object exiting the team live stream.

32. The apparatus according to claim 31, wherein the live streaming identification information sending unit is further configured to:
in response to that the total number of the objects in the team live stream corresponding to the object exiting the team live stream does not exceed the second preset threshold, send a team live streaming disbanding instruction to the client used for the team live stream and the client playing the media stream of the team live stream to instruct that the client used for the team live stream and the client playing the media stream of the team live stream delete the live streaming identification information of all the objects corresponding to the team live stream.

33. A live streaming apparatus, comprising an information receiving unit and an information displaying unit, wherein:
the information receiving unit is configured to receive live streaming identification information of an object participating in a team live stream sent by a live streaming server, wherein the live streaming identification information is acquired by the live streaming server based on received team forming indication information, and the team forming indication information comprises account information of at least one object in one same team in a target application; and
the information displaying unit is configured to display part of or all of the live streaming identification information.

34. The apparatus according to claim 33, wherein the information displaying unit is further configured to:
send live streaming switching information to the live streaming server after part of or all of the live streaming identification information is displayed, wherein the live streaming switching information is generated by a preset operation on any live streaming identification information; and
receive a media stream of the team live stream sent by the live streaming server and corresponding to the any live streaming identification information.

35. The apparatus according to claim 33, wherein the information receiving unit is further configured to:
receive a team live streaming confirming message, wherein the team live streaming confirming message is sent after the live streaming server receives the team forming indication information; and
send a response message to the live streaming server to make the live streaming server use an object corresponding to the response message indicating to participate in the team live stream as an object participating in the team live stream.

36. The apparatus according to claim 35, wherein in the condition that the team forming indication information is sent by a target application server and comprises account information of at least two objects, the information receiving unit is further configured to:
after sending the response message to the live streaming server, receive first team forming failure signaling, wherein the first team forming failure signaling is sent after the live streaming server knows that the number of the objects participating in the team live stream is not larger than a first preset threshold based on the response messages of clients corresponding to the account information of the at least two objects.

37. The apparatus according to claim 35, wherein the information receiving unit is further configured to:
before said receiving the team live streaming confirming message sent by the live streaming server, send the team forming indication information to the live streaming server, wherein the team forming indication information comprises account information of the object invited for the team live stream.

38. The apparatus according to claim 37, wherein the information receiving unit is further configured to:
after the team forming indication information is sent to the live streaming server, receive second team forming failure signaling, wherein the second team forming failure signaling is sent after the live streaming server knows that the object invited for the team live stream refuses to participate in the team live stream based on a response message of a client corresponding to the object invited for the team live stream.

39. The apparatus according to any one of claims 33 to 38, wherein the information displaying unit is further configured to:
after said displaying part of or all of the live streaming identification information,
receive a team live streaming exiting instruction, and deleting the live streaming identification information of the object exiting the team live stream indicated by the team live streaming exiting instruction, wherein the team live streaming exiting instruction is sent after the live streaming server knows that the total number of the objects in the team live stream corresponding to the object exiting the team live stream exceeds a second preset threshold based on a team live streaming exiting request, and the team live streaming exiting request is triggered by the object exiting the team live stream through the client; or
receiving a team live streaming disbanding instruction, and deleting the live streaming identification information of all objects in the team live stream corresponding to the team live streaming disbanding instruction, wherein the team live streaming disbanding instruction is sent after the live streaming server knows that the total number of the objects in the team live stream corresponding to the object exiting the team live stream does not exceed a second preset threshold based on the team live streaming exiting request, and the team live streaming exiting request is triggered by the object exiting the team live stream through the client.

40. A live streaming apparatus, comprising a team forming indication information establishing unit and a team forming indication information sending unit, wherein:
the team forming indication information establishing unit is configured to establish team forming indication information, wherein the team forming indication information comprises account information of at least two objects in one same team in a target application; and
the team forming indication information sending unit is configured to send the team forming indication information to a live streaming server, so that a live streaming client acquires live streaming identification information of an object corresponding to account information of at least one object and participating in a team live stream and sends the live streaming identification information to a client used for the team live stream and a client playing a media stream of the team live stream.

41. An electronic device, comprising a processor, and a memory used for storing instructions executable by the processor; wherein:
the processor is configured to execute the method according to any one of claims 1 to 12.

42. An electronic device, comprising a processor, and a memory used for storing instructions executable by the processor; wherein:
the processor is configured to execute the method according to any one of claims 13 to 19.

43. An electronic device, comprising a processor, and a memory used for storing instructions executable by the processor; wherein:
the processor is configured to execute the method according to claim 20.

44. A computer readable storage medium, carrying one or more computer instruction programs, wherein when the computer instruction programs are executed by one or more processors, the one or more processors execute the method according to any one of claims 1 to 12 or claims 13 to 19 or claim 20.
